# NOUVEAU FASCICULE DE BREVET EUROPEEN

(11) **EP 1 262 108 B2**
(45) Date de publication et mention de la décision concernant l'opposition: **25.05.2011**
(45) Mention de la délivrance du brevet: 29.03.2006
(21) Numéro de dépôt: 02370023.0
(22) Date de dépôt: 24.05.2002
(51) Int. Cl.: A23L 1/305, A23L 1/29, A23C 11/10, A23C 11/06

(54) **Aliment diététique de substitution au lait et au soja**
Diätetisches Milch- und Sojaersatzprodukt
Dietetic milk and soy substitute

(30) Priorité: 28.05.2001 FR 0107023
(43) Date de publication de la demande: 04.12.2002
(73) Titulaire: Aboudiab, Taan, 80200 Peronne (FR)
(72) Inventeur: Aboudiab, Taan, 80200 Peronne (FR)

(56) Documents cités:
- EP-A1- 0 469 206
- EP-A1- 0 729 710
- EP-A2- 0 189 161
- EP-A2- 0 611 261
- WO-A1-01/70047
- WO-A1-99/01044
- GB-A- 2 018 120
- US-A- 5 126 162
- US-A- 6 051 260
- US-A- 6 063 433
- DATABASE FSTA [en ligne] INTERNATIONAL FOOD INFORMATION SERVICE (IFIS), FRANFURT/MAIN, DE; LUDNEVA D: "Canned foods for infants allergic to cows milk." Database accession no. 93-1-08-g0002 XP002192063 & KHRANITELNA PROMISHLENOST 1993 NIKP, PLOVDIV, BULGARIA, vol. 42, no. 1, pages 24-25,
- DATABASE BIOSIS [en ligne] BIOSCIENCES INFORMATION SERVICE, PHILADELPHIA, PA, US; 1994 LANDERS PATTI S ET AL: "Antigenic properties of albumin, globulin, and protein concentrate fractions from rice bran." Database accession no. PREV199497511201 XP002192064 & CEREAL CHEMISTRY, vol. 71, no. 5, 1994, pages 409-411, ISSN: 0009-0352

## Description

L'invention se rapporte à un aliment diététique pour améliorer la vie de tous les jours des nouveau-nés, des nourrissons et des enfants intolérants au lait, au soja et à certains allergènes alimentaires les plus fréquents.

Le document GB-A-2018120 décrit un substitut au lait maternel et au lait de vache.

Ce document GB-A-2018120 mentionne une publication de 1929 suggérant l'utilisation de préparations à base de soja comme substitut au lait de vache, pour l'alimentation des enfants souffrant d'intolérance au lait de vache.

Ce document GB-A-2018120 mentionne une publication de 1970, dans la revue Pédiatrics, soulignant l'occurrence de cas d'intolérance au soja et il est aujourd'hui connu que les intolérances au lait de vache sont, dans un certain nombre de cas, combinées à une intolérance au soja, du fait d'allergènes croisés.

Le document GB-A-2018120 propose un substitut au lait maternel et au lait de vache, ce substitut comprenant de la viande d'agneau, de la crème de riz, de l'huile d'olive, du sel et de l'eau. Ce substitut est présenté comme adapté en cas d'intolérance aux protéines du lait de vache ou à la viande de boeuf, ainsi qu' en cas d'intolérance au soja (page 1, lignes 3, 27, 34 et 36 de ce document antérieur).

La demanderesse a constaté qu'un tel substitut alimentaire n'apportait pas toute satisfaction, notamment vis à vis des venues d'autres hypersensibilités alimentaires.

Le document US-A-6063433 décrit un substitut au lait de vache et aux produits à base de soja, ce substitut comprenant toutefois une grande quantité de lait de chèvre.

Le lait de chèvre comprend environ 88 % d'eau, les 12 % d'extraits secs contenant environ 3 % de matière grasse et 8 % d'extraits secs dégraissés, ces extraits secs dégraissés étant constitués d'environ 4 % de lactose.

Au total, le lait de chèvre contient environ 45 grammes de lactose par litre.

Parmi les causes d'intolérances au lait de vache, on connaît notamment l'intolérance ou l'allergie aux protéines du lait, mais aussi l'intolérance aux lactose.

Un sujet intolérant au lactose ne synthétise pas l'enzyme lactase ou en produit trop peu pour assurer la digestion du lactose dans l'intestin. Il en résulte des ballonnements, des douleurs abdominales et des diarrhées.

L'intolérance au lactose, bien que moins dangereuse qu'une allergie aux protéines du lait, est source d'inconfort et peut être permanente, tout au long de la vie du sujet.

Le substitut alimentaire décrit dans le document US-A-6063433 n'apporte aucun réconfort, bien au contraire, aux sujets intolérants au lactose contenu dans le lait de vache, le substitut alimentaire décrit dans ce document antérieur contenant du lait de chèvre, riche en lactose et contenant les mêmes composants protéiques allergisants que le lait de vache.

D'une manière générale, les aliments diététiques de première intention à la disposition des enfants allergiques aux protéines du lait sont à base d'hydrolysats poussés provenant du lait ou à base de soja et de leurs dérivés (produits vendus sous les marques Isomil, Nursay, Prosobee, Nutramigen, Alimentum, Prégestimil, Peptijunior, Galliagène Progrès, Alfaré, Prégomine, Nutricia Soja, Gallia Soja, Blédilait Soja, Modilac Soja, Guigoz Soja).

Certaines études montrent que beaucoup de nourrissons et d'enfants présentant des signes cliniques et des symptômes en faveur d'une hypersensibilité au lait, ne sont que partiellement améliorés par ces produits. Ceci s'explique par le fait que ces produits sont destinés aux sujets présentant une hypersensibilité immédiate aux protéines du lait (type I) et le fait d'hydrolyser les protéines permettait de les rendre indétectables par le système immunitaire.

La disparition incomplète des symptômes et des signes cliniques (tels que les coliques du nourrisson, les régurgitations, certains reflux gastro-oesophagiens non organiques, les selles diarrhéiques, la constipation, la dermatite atopique et les troubles du sommeil), chez les enfants alimentés par ces produits diététiques de première intention, peut être en rapport avec une hypersensibilité semi-retardée (type III) ou retardée (type IV) au lait et au soja. Cette hypersensibilité est malheureusement non détectée par les méthodes de dosage des IgE spécifiques ; de ce fait les lymphocytes sensibilisés sont capables de reconnaître les fractions de protéines hydrolysées même à un faible poids moléculaire et continueraient à induire des immunoglobulines spécifiques responsables de la symptomatologie.

L'aliment diététique selon l'invention permet d'améliorer la vie de tous les jours des nouveau-nés, des nourrissons, des enfants ou des adultes intolérants au lait, au soja et à certains allergènes alimentaires les plus fréquents, en limitant la survenue d'autres allergies alimentaires les plus fréquentes après le lait et le soja.

A cette fin, l'invention se rapporte, selon un premier aspect, à un aliment diététique de substitution pour sujets allergiques au lait et au soja, caractérisé en ce qu'il comprend des protéines végétales autres que celles du soja, des protéines animales, des acides aminés, ainsi qu'un probiotique et/ou un prébiotique; et des acides gras saturés, mono ou polyinsaturés provenant du colza, du coprah, du carthome

L'aliment diététique est dépourvu de gluten, de protéines végétales issues du blé ou du maïs, de protéines animales issues du boeuf, de volailles, de poissons, d'oeufs.

La demanderesse a en effet constaté l'occurrence d'allergies alimentaires multiples chez certains enfants déjà allergiques au lait et au soja.

De même, la demanderesse a constaté qu'il était avantageux :
- que les acides gras ne proviennent ni de l'arachide, ni du soja, ni du maïs

Selon les besoins, et sans que cela s'avère défavorable en termes d'allergie ou d'intolérance alimentaire, le substitut diététique peut être enrichi en au moins un composant choisi parmi le groupe constitué des glucides monosacharides, dissacharides, polysaccharides, du docosahexanoïque DHA, des vitamines, des oligo-élements, des sels minéraux, de la carnitine, de la taurine, de la lysine, de la méthionine.

Les vitamines peuvent notamment être choisies parmi le groupe constitué des vitamines A, D, E, K, C, B6, B12.

L'aliment diététique est enrichi en un composé choisi parmi le groupe constitué de la niacine, de l'acide pantothénique, de la folacine, de la biotine, de la choline, de l'inositol, de la riboflavine, de la thiamine.

Les protéines végétales sont issues de riz précuit. Si besoin, les protéines végétales sont complétées par des protéines animales issues de l'agneau et/ou du porc.

Selon une réalisation, l'aliment se présente sous forme de poudre lyophilisée conditionnée dans des boites de 450 ou 900 grammes, par exemple, la reconstitution se faisant à l'aide d'une mesurette pour 30 ml d'eau.

Selon une autre réalisation, l'aliment se présente sous forme d'une solution reconstituée prête à l'emploi, par exemple en bouteille de 500 ml.

La demanderesse a constaté que la supplémentation d'un probiotique ou d'un prébiotique améliore la prévention d'autres hypersensibilités alimentaires, chez les sujets présentant une allergie au lait et au soja.

L'aliment diététique selon l'invention est destiné aux sujets allergiques au lait et au soja, et à titre d'exemple il peut être indiqué en complément de l'allaitement maternel lorsque les circonstances l'exigent ainsi qu'en cas de diarrhée aiguë ou chronique chez les enfants ayant des antécédents familiaux ou personnels d'atopie.

## Revendications

1. Aliment diététique de substitution pour les sujets allergiques au lait et au soja, **caractérisé en ce qu'**il comprend :
- Des protéines végétales issues du riz précuit,
- Des protéines animales
- Des acides aminés,
- Un probiotique et/ou un prébiotique,
- Des acides gras saturés, mono ou polyinsaturés et
**en ce que** ledit aliment diététique est dépourvu :
i) de gluten,
ii) de protéines végétales issues du blé ou du maïs,
iii) de protéines animales issues du boeuf, des volailles, du poisson ou des oeufs et
**en ce que** les acides gras proviennent du colza, du coprah, du carthame.

2. Aliment diététique selon la revendication 1, **caractérisé en ce qu'**il est enrichi en au moins un composant choisi parmi le groupe constitué des glucides monosaccharides, disaccharides, polysaccharides, du docosahexanoïque DHA, des vitamines, des oligo-éléments, des sels minéraux, de la carnitine, de la lysine, de la méthionine.

3. Aliment diététique selon la revendication 2, **caractérisé en ce que** les vitamines sont choisies parmi le groupe constitué des vitamines A, D, E, K, C,B6,B12.

4. Aliment diététique selon l'une des revendications 2 et 3, **caractérisé en ce qu'**il est enrichi en un composé choisi parmi le groupe constitué de la niacine, de l'acide pantothénique, de la folacine, de la biotine, de la choline, de l'inositol, de la riboflavine, de la thiamine.

5. Aliment diététique selon l'une quelconque des revendications 1 à 4, **caractérisé en ce que** les protéines animales sont issues de l'agneau et/ou du porc.

6. Aliment diététique selon l'une quelconque des revendications 1 à 5, **caractérisé en ce qu'**il se présente en poudre lyophilisée ou en solution reconstituée prête à l'emploi.

## Claims

1. Dietetic substitution nutriment for subjects allergic to milk and soy, **characterised by** the following content :
- Vegetable proteins coming from precooked rice,
- Animal proteins,
- Amino acids
- A probiotic and/or a prebiotic,
- Saturated, mono or polyunsaturated fatty acids and
this dietetic nutriment is tree of :
i) Gluten,
ii) Vegetable proteins coming from wheat or corn,
iii) Animal proteins coming from beef, poultry, fish or eggs and
the fatty acids coming from colza, copra, carthame.

2. Dietetic nutriment according to claim 1 **characterised in that** it is enriched with at least one component chosen from among the group consisting of monosaccharide, disaccharide, polysaccharide glucids, decosahexanoic DHA, vitamins, trace elements, mineral salts, carnitine, taurine, lysine, methionine.

3. Dietetic nutriment according to claim 2 **characterised in that** the vitamins are chosen from among the group of vitamins A, D, E, K, C, B6, B12.

4. Dietetic nutriment according to claims 2 and 3 **characterissed in that** it is enriched with a compound chosen from among the group consisting ofniacine, pantothenic acid, folacine, biotine, choline, inositol, riboflavine, thiamine.

5. Dietetic nutriment according to any of claims 1 to 4 **characterised in that** the animal proteins are derived from lamb and/or pork.

6. Dietetic nutriment according to any of claims 1 to 5 **characterised in that** it comes in freeze-dried powder or in ready-to-use reconstituted solution.

## Patentansprüche

1. Auswechslungs Diätnahrung für die gegen Milch und Soja allergischen Subjekte, charakteristisch indem er enthält :
- pflanzliche von vorgekochtem Reis abstammenden Proteine,
- tierische Proteine,
- Aminosäuren,
- ein Probiotik und/oder ein Prebiotik,
- gesättigte fette Säuren, mono oder polyungesättigte fette Säuren
Und diese Diätnahrung ist:
i) Glutenfrei,
ii) von pflanzlichen von Korn oder Mais abstammenden Proteinen entbehrt,
iii) von tierschen Proteinen, die vom Rind, Gelfügel Fisch oder von den Eiern abstammend sind entbehrt
und was den fetten Säuren betrifft, stammen sie vom Raps und vom Kopra und vom Kartham.

2. Diätnahrung nach irgendeiner der Anforderungen 1 charakterisiert inden sie mindestens mit einem Bestandteil, angereichert ist. Bestandteil, der zur aus monosachariden disachariden polysachariden Kohlenhydraten und docosahexanoik DHA Vitaminen Spurenelementen Mineralsalzen Kamithin Taurin Lysin und Methionin bestehenden Gruppe gehört.

3. Diätnahrung nach der Anforderung 2 charakterisiert indem sie Vitaminen unter der aus A D E K C B6 B12 Vitaminen bestehenden Gruppe enthält.

4. Diätnabrung nach irgendeiner der Anforderung 2 und 3 charakterisiert indem sie mit einem Bestandteil der aus Niacin Pantotheniksäuren Folacin Biotin Inositol Riboflavin Thiamin bestehenden Gruppe angereichert ist.

5. Diätnahrung nach irgendeiner der Anforderungen 1 bis 4 charakterisiert indem die tierischen Proteine aus dem Lamm und/oder Schwein abstammen.

6. Diätnahrung nach irgendeiner der Anforderungen 1 bis 5 charakterisiert indem sie die Form eines lyophilisierten Pulvers oder einer gebrauchsfertigen rekonstruierten Lösung.
